# FASCICULE DE BREVET EUROPEEN

(11) **EP 3 558 798 B1**
(45) Date de publication et mention de la délivrance du brevet: **23.09.2020**
(21) Numéro de dépôt: 17825581.6
(22) Date de dépôt: 15.12.2017
(51) Int. Cl.: B62D 35/00, B62D 37/02

(54) **SYSTÈME AÉRODYNAMIQUE RÉTRACTABLE POUR VÉHICULE AUTOMOBILE**
ABKLAPPBARES AERODYNAMISCHES SYSTEM FÜR EIN KRAFTFAHRZEUG
RETRACTABLE AERODYNAMIC SYSTEM FOR VEHICLES

(30) Priorité: 22.12.2016 FR 1663211
(43) Date de publication de la demande: 30.10.2019
(73) Titulaire: Compagnie Plastic Omnium, 69007 Lyon (FR)
(72) Inventeur: ANDRE, Gérald, 01500 Saint Denis En Bugey (FR)
(74) Mandataire: LLR
(86) Numéro de dépôt international: PCT/FR2017/053595
(87) Numéro de publication internationale: WO 2018/115652

(56) Documents cités:
- WO-A1-2015/059377
- WO-A1-2016/102881
- JP-A- H0 342 381

## Description

La présente invention concerne le domaine des véhicules automobiles. En particulier, l'invention concerne un système aérodynamique rétractable, destiné à être monté sur un véhicule automobile.

Des véhicules comportant des éléments mobiles intégrés sous le bouclier avant du véhicule sont décrits par exemple dans les brevets français FR2821593, FR2927303 et FR2864811, JP H03 42381 A.

De tels volets rétractables sont destinés à améliorer l'aérodynamique du véhicule, par exemple en réduisant la traînée du véhicule, et sa consommation, notamment à partir de vitesses supérieures à 70km/h. Ces volets peuvent être placés à divers endroits de la carrosserie : face avant, faces latérales et/ou face arrière.

De tels volets sont particulièrement utiles en sous-bassement des véhicules ayant une importante garde au sol tels que les 4 X 4, SUV et monospaces. Ces véhicules, en effet, consomment plus de carburant, notamment du fait d'une garde au sol impliquant de fortes pertes aérodynamiques.

Ces volets aérodynamiques rétractables peuvent simplement être montés sur un arbre et entraînés en rotation sur cet arbre par un moyen moteur comprenant un moteur électrique. Que le moteur du moyen moteur soit du type motoréducteur irréversible ou réversible, les volets sont généralement en prise directe avec le motoréducteur dont la transmission en rotation est assurée au moyen d'une vis sans fin accouplée à roue dentée, toutes deux accouplées au rotor du moteur électrique.

Un volet aérodynamique actif a pour fonction de limiter le passage d'air sous le véhicule. Pour ce faire, il possède une surface importante (0,1 à 0,2m²) qui implique que le volet subit, lorsqu'il se trouve en position ouverte et à haute vitesse, des efforts élevés (pouvant engendrer un couple de l'ordre de 15 - 20Nm). Les efforts sont répercutés sur son axe de rotation, ce qui a pour conséquence directe une sollicitation importante sur la vis sans fin et la roue dentée. De plus, dans la majorité des cas, la roue dentée du moteur est faite de plastique. Il existe donc un risque important de fluage d'une telle roue, voire un endommagement de ses dents, en fatigue notamment.

En outre, le volet peut également être soumis à des efforts dits exceptionnels, par exemple un vent violent, un choc à grande vitesse ou encore des efforts manuels.

Afin de remédier à ce problème, il a été proposé dans la demande de brevet FR3031150, au nom de la demanderesse, un organe de débrayage permettant de désolidariser le moyen moteur et l'arbre. Cette solution, bien que permettant de protéger le moyen moteur et ses éléments contre les efforts mentionnés, implique la liberté en rotation entre l'arbre portant le volet et le moyen moteur.

De plus, le volet est également soumis à des sollicitations environnementales, telles que des turbulences aérodynamiques ou les vibrations du véhicule, en addition de la charge aérodynamique. Celles-ci causent des vibrations dans la roue et favorisent la rotation de la vis sans fin, et donc la rotation du volet. Ce dernier n'assure alors plus sa fonction aérodynamique de manière optimale.

Afin de compenser l'ensemble des efforts transmis par le volet au moyen moteur en situation normale de roulage, sans pour autant devoir entraîner un désengagement de liaison entre le moyen moteur et l'arbre entrainé en rotation, il a déjà été envisagé d'appliquer un effort permanent par le moyen moteur afin de compenser les petites rotations qui peuvent se produire. Cependant, cette solution présente l'inconvénient d'une alimentation permanente du moyen moteur en énergie, et ne résout pas le problème de contraintes et de fatigue sur les dents de la roue dentée.

Une autre solution consiste à remettre temporairement le moyen moteur en activité lorsqu'un décalage est constaté. Néanmoins, cette solution nécessite que le moyen moteur soit équipé d'un capteur rotatif (généralement système d'aimant et capteur à effet hall) et aussi d'un système électronique capable de traiter l'information transmise par le capteur en continu. Cette solution présente donc une complexité supplémentaire de mise en place et un surcoût qui la rendent peu attractive pour les constructeurs automobiles.

L'invention a pour but de remédier à ces inconvénients en fournissant un système aérodynamique peu contraignant pour le moyen moteur, qu'il soit de type irréversible ou non, et ses composants, tels que la vis sans fin et la roue dentée, simple à implémenter sur les véhicules, et attractif pour les constructeurs automobiles.

A cet effet, on prévoit selon l'invention un système aérodynamique rétractable pour véhicule automobile comprenant une structure du véhicule, au moins un volet aérodynamique, un moyen moteur apte à mettre en rotation le volet aérodynamique autour d'un axe de rotation, et au moins un organe de verrouillage du volet aérodynamique dans une position indexée par rapport à la structure du véhicule, l'organe de verrouillage étant apte à transmettre des efforts subis par le volet aérodynamique à la structure du véhicule lorsque le volet aérodynamique est verrouillé dans la position indexée.

Le moyen moteur peut être tout moyen connu de l'homme du métier permettant de mettre en rotation le volet autour de l'axe de rotation. Un tel moyen moteur peut être un ensemble constitué d'un réducteur et d'un moteur électrique, ensemble également appelé motoréducteur.

La structure du véhicule représente les éléments de forte rigidité qui constituent l'armature du véhicule et que les équipements intérieurs et extérieurs de la carrosserie viennent garnir. Cette structure est majoritairement composée de la caisse en blanc.

Ainsi, après une rotation autour de l'axe de rotation, induite par le moyen moteur, qui a permis de faire pivoter le volet aérodynamique d'un certain angle, jusqu'à ce qu'il soit dans une position désirée, par exemple la position ouverte pour laquelle l'aérodynamisme du véhicule est optimal, l'organe de verrouillage du système selon l'invention permet à la fois le verrouillage du volet dans cette position et la transmission d'une grande partie des efforts subis par le volet à la structure du véhicule, épargnant ainsi considérablement les composants du moyen moteur. De tels efforts peuvent être les efforts vibratoires et les pics d'efforts de courte durée, pouvant correspondre à des chocs du volet aérodynamique qui n'occasionnent pas une amplitude de rotation suffisante du volet pour obliger ce dernier à quitter sa position indexée. Par conséquent, le moyen moteur peut être désactivé une fois la position indexée atteinte, avec un risque réduit, voire nul, d'endommagement de ses composants du fait des efforts subis par le volet, et ce, pour une charge aérodynamiques permanente (pour les moteurs de type réversible) et pour des efforts ponctuels ou périodiques (pour les moteurs de type irréversible).

Avantageusement, l'organe de verrouillage est apte à transmettre les efforts subis de façon à permettre un verrouillage du volet aérodynamique sans effort exercé par le moyen moteur.

Ainsi, un tel système permet de mieux protéger le moyen moteur contre les efforts subis par le volet verrouillé en position indexé. Par extension, les composants du moteur sont également mieux protégés dans cette variante avantageuse de l'invention.

Avantageusement, l'organe de verrouillage comprend au moins un ensemble constitué d'un élément ressort et d'un logement agencé pour accueillir au moins une partie de l'élément ressort, le logement et l'élément ressort étant agencés pour être assemblés l'un à l'autre avec un jeu faible, de préférence à jeu nul.

Ainsi, l'organe de verrouillage présente un effet amortissant grâce à son élément ressort ou à ses éléments ressort. Un tel effet permet de filtrer les efforts subis par le volet qui sont transmis, par l'organe de verrouillage, à la structure du véhicule. Par conséquent, le volet ne se trouve plus lié de manière rigide à la structure du véhicule, ce qui offre une protection de l'axe de rotation et des éléments de liaisons. De plus, l'assemblage entre le logement et l'élément ressort permet de verrouiller le volet dans la position indexée de manière plus sécurisée. En effet, une fois la position indexée atteinte, grâce à la rotation d'une zone cylindrique du système sur laquelle est situé le logement, l'élément ressort peut entrer avec force dans le logement et verrouiller de façon nette la position du volet. Par conséquent, les risques de déverrouillage de la position du volet qui entrainerait des contraintes sur la vis sans fin et la roue dentée du moteur sont davantage réduits. La liberté de rotation du volet, lorsque ce dernier se trouve verrouillé dans la position indexée, est réduite au maximum. Par conséquent, les contraintes induites par une telle liberté de rotation et qui se répercutent sur le reste du système sont elles aussi réduites au maximum, ce qui préserve encore davantage la robustesse des composants du système.

Avantageusement, le jeu, entre le logement et l'élément ressort, est inférieur à tous jeux présents au sein du reste du système.

Dans la présente description, on entend par « tous jeux présents au sein du reste du système », les autres jeux en rotation présents au sein du système, tels que les jeux en rotation présents au sein du moyen moteur, par exemple les jeux entre les éléments constitutifs du moteur (vis sans fin, roue dentée, *etc*.)*.*

Ainsi, l'ensemble des contraintes résultant des efforts aérodynamiques se transmet au niveau de la liaison entre le logement et l'élément ressort grâce au jeu plus faible que n'importe lequel des jeux caractérisant d'autres liaisons du système, notamment les liaisons au niveau du moyen moteur. Ces liaisons, qui présentent un jeu plus important, sont donc épargnées par les contraintes résultantes des efforts aérodynamiques subis par le volet.

Avantageusement, le logement comprend une cavité. De préférence, cette cavité est une forme concave qui présente une profondeur de 2 à 5 mm.

Ainsi, il est simple de conformer la partie de l'élément ressort avec une forme complémentaire à celle du logement, par exemple, convexe. Il est dès lors plus aisé d'assurer l'absence de jeu entre l'organe qui présente le logement et l'élément ressort, lors de la rotation du volet autour de l'axe de rotation, tout en assurant un angle de rotation faible avant le dégagement de l'élément ressort. Cela permet ainsi le déverrouillage de la position indexée lorsqu'un tel déverrouillage est nécessaire, par exemple, sous l'action d'une force externe trop importante s'applique sur le volet ou, à l'inverse sous l'action du moyen moteur, lorsque la vitesse du véhicule est réduite d'une manière que le volet n'a plus lieu d'être déplié. Cumulativement, il est possible de prévoir un déplacement radial de l'élément ressort entre 2 et 5 mm, c'est-à-dire un déplacement du centre de l'organe qui présente le logement vers l'extérieur de cet organe, pour le désengagement entre l'élément ressort et le logement.

Avantageusement, l'élément ressort est agencé pour se désengager du logement lorsqu'un couple exercé autour de l'axe de rotation est supérieur à un seuil prédéterminé, de préférence 50% des efforts maximaux subis par le volet aérodynamique (4) en roulage.

Ainsi, comme mentionné dans le paragraphe précédent, l'élément ressort peut présenter une partie de forme convexe complémentaire de la forme concave du logement de manière à permettre leur assemblage sans jeu. De préférence, le coefficient de frottement entre le matériau du logement et celui de l'élément ressort est faible, de l'ordre de 0,1. Dès lors, grâce à la quasi absence de jeu combinée au faible frottement entre le logement et l'élément ressort, il devient possible d'anticiper, avec une grande précision, le couple qu'il est nécessaire d'appliquer afin de comprimer suffisamment l'élément ressort pour le faire sortir du logement. Par conséquent, lorsqu'il est nécessaire que le volet aérodynamique quitte sa position indexée, l'électronique du véhicule peut activer le moyen moteur afin qu'il induise un couple autour de l'axe de rotation suffisant pour forcer la sortie de l'élément ressort. Ce couple supérieur au seuil peut également être la résultante d'efforts aérodynamiques trop importants subis par le volet lors de situations exceptionnelles, telles que des petits chocs ou un vent violent. De cette manière, il est possible de protéger le volet qui pivote jusqu'à une position où il est moins soumis à ces efforts, de préférence, jusqu'à la position de repli.

Avantageusement, le système selon l'invention comprend en outre un organe de débrayage pour le désengagement d'une liaison entre le moyen moteur et le volet aérodynamique.

Un tel organe de débrayage est particulièrement avantageux lors de l'utilisation de moteur de type irréversible, c'est-à-dire de moteur comprenant par exemple une vis sans fin à faible pente qui ne peut être entrainée en rotation par une rotation ponctuellement forcée par le volet. Cet organe de débrayage peut, par exemple, comporter deux éléments aptes à s'emboîter l'un dans l'autre selon une direction sensiblement parallèle à l'axe de rotation, un de ces éléments étant relié au moyen moteur et l'autre au volet aérodynamique. Comme décrit dans la demande FR3031150, le premier élément peut comporter un évidemment à l'interface d'emboitement de ces deux éléments, un tel évidement pouvant accueillir un moyen élastique du deuxième élément lorsque cela est nécessaire et ainsi rendre solidaire en rotation les deux éléments et, par extension le moyen moteur et le volet aérodynamique.

Ainsi, avec un tel organe de débrayage, utilisé en association, de l'organe de verrouillage, il est possible de fournir un système permettant d'interrompre la liaison entre le moyen moteur et le volet et, par conséquent, d'interrompre également la transmission au moyen moteur des efforts subis par le volet, permettant ainsi de préserver le moteur et ses composants contre une usure prématurée ou d'un dommage causé par ces efforts.

Avantageusement, le logement ou au moins l'un des logements l'organe de verrouillage est situé sur le volet aérodynamique.

Cela offre la possibilité de positionner le logement à une plus grande distance de l'axe de rotation, ce qui demande un effort moindre par le ressort pour le même couple de verrouillage.

Ainsi, il est possible de prévoir un ou plusieurs logements sur la longueur du volet de manière à optimiser le verrouillage du volet dans la ou les positions indexées, lors de la fabrication du volet. De plus, le logement peut ici ne pas être directement situé sur la zone circulaire matérialisant l'axe de rotation mais plus éloigné sur le volet aérodynamique, ce qui permet de prévoir un plus petit débattement angulaire de l'élément ressort pour son engagement et son dégagement du logement. De plus, le point de verrouillage, formé par l'ensemble constitué de l'élément ressort et le logement, peut ne pas être en proximité directe du moyen moteur, ce qui permet de faire collaborer l'organe de verrouillage et le moyen moteur à la tenue des efforts aérodynamiques.

Avantageusement, le logement ou au moins l'un des logements est éloigné du moyen moteur, de préférence le logement étant situé à proximité du centre de poussée du volet.

Ainsi, un tel positionnement permet d'équilibrer les effets de torsion qui s'appliquent sur l'ensemble de l'axe de rotation. Une telle position du logement peut être le centre de poussée du volet qui correspond à la zone du volet permettant la meilleure répartition équilibrée les forces de torsion au sein du volet. On pourrait ainsi, grâce à l'organe de verrouillage, avoir un volet plus souple bien que l'actionneur soit situé à une de ses extrémités. Une telle position permet une limitation optimale du fléchissement maximal du volet. Le logement peut également être positionné au plus loin du moyen moteur. Par conséquent, une telle position, qui implique un fléchissement plus important du volet, offre la possibilité d'une précontrainte du volet par le moyen moteur lorsque le verrouillage est engagé, afin de compenser les jeux et la souplesse du volet. On obtient ainsi une collaboration à la tenue des efforts aérodynamique entre le moyen moteur et l'organe de verrouillage, à part égale.

Dans une variante de ce mode de réalisation, le logement ou au moins l'un des logements est situé à proximité du moyen moteur.

Ainsi, le couple que doit exercer le moyen moteur afin de désassembler l'élément ressort et le logement peut être moins important du fait de l'absence d'amortissement des forces induites par le moyen moteur jusqu'au logement, cumulé à l'effet de la proximité géographique du logement par rapport au moyen moteur, qui confère une plus grande rigidité à la transmission du couple. Par conséquent, cela permet un fonctionnement optimisé du système lors de l'actionnement de la rotation du volet par le moyen moteur, car le moyen moteur ne fournit que le couple nécessaire pour l'opération de désassemblage de l'organe de verrouillage.

Avantageusement, le système comprend au moins deux logements dont les cavités présentent des profondeurs différentes l'une de l'autre.

Ainsi, il est possible de verrouiller, au sein d'un même système, deux positions de rotation indexées avec des niveaux de verrouillage différents. En effet, l'élément ressort entre avec plus de profondeur dans le logement présentant la profondeur la plus importante, ce qui, à forme identique pour les deux logements, rend la sortie de l'élément ressort plus difficile que pour un assemblage avec l'autre logement. Dès lors la position indexée liée au point de verrouillage avec le logement le plus profond, est plus sécurisée. Par exemple, la position la plus sécurisée peut être la position ouverte du volet et la seconde position peut être la position fermée. Une telle combinaison peut être particulièrement envisageable si le moyen moteur utilisé pour l'actionnement comprend un moteur de type réversible. En effet, dans ce cas, le volet a besoin d'être constamment maintenu par l'organe de verrouillage, lorsque le moyen moteur n'est pas alimenté en énergie afin d'éviter que le moyen moteur ne tourne, entrainé par exemple par le poids du volet en position fermée lorsque le véhicule subi des accélérations verticales lors du roulage.

Avantageusement, au moins deux logements sont disposés au sein du système pour permettre le verrouillage de la même position indexée.

Ainsi, il est possible de combiner les forces de verrouillage de plusieurs points de verrouillage. Les logements propres à chaque point de verrouillage sont donc répartis le long de l'axe de rotation du système de manière à verrouiller le même angle d'inclinaison du volet. Evidemment, une telle variante nécessite la présence au sein du système d'au moins autant d'éléments ressorts qu'il y a de logements prévus pour verrouiller le même angle d'inclinaison du volet, ces éléments ressorts étant aptes à rentrer chacun simultanément dans l'un des logements. Ces éléments ressorts peuvent être présents au sein du même organe de verrouillage ou au sein d'organes de verrouillage différents.

Avantageusement, le système comprend des séries de logements disposés le long de l'axe de rotation, sur le volet et/ou sur une zone de l'axe de rotation distincte du volet, permettant de couvrir tous les angles d'inclinaisons du volet avantageux sur le plan de l'optimisation aérodynamique de différents véhicules automobiles. Dès lors, il ne reste plus qu'à positionner le ou les éléments ressort pour qu'ils rencontrent les bons logements, en fonction du type de véhicule et du ou des angles utilisés pour ce véhicule. Par conséquent, un tel système peut être implémenté sur tout type de véhicule, ce qui représente un avantage substantiel pour le fabriquant.

Avantageusement, le système comprend des moyens de liaison du volet aérodynamique à la structure du véhicule, les moyens de liaison étant agencés pour permettre une rotation du volet aérodynamique autour de l'axe de rotation et dans lequel l'élément ressort est fixé aux moyens de liaison.

Ainsi, la transmission des efforts de l'organe de verrouillage vers la structure du véhicule impose moins de risque de jeu, car les déformations sont limitées par les moyens de liaison. De plus, une partie de ces moyens peut être agencée pour servir de support à la zone circulaire matérialisant l'axe de rotation et entourer partiellement cette dernière. Cette partie peut être caractérisée de bague de frottement et permet de sécuriser le positionnement de l'axe de rotation et donc d'assurer la bonne rotation du volet autour de l'axe de rotation.

Avantageusement, l'organe de verrouillage, l'axe de rotation, et/ou les moyens de liaison sont formés à partir d'inox, acier traité ou plastique à friction faible, tels que le polyoxyméthylène (POM) ou encore le polyamide PA66.

Ainsi, lorsque l'élément ressort de l'organe de verrouillage est en dehors de l'un des logements et est donc comprimé, il n'oppose qu'un effort faible à la rotation du volet aérodynamique. En effet, cet effort faible est limité aux frottements réduits de la surface de contact de l'élément ressort avec l'organe qui présente le logement, à savoir soit l'axe en rotation, soit le volet aérodynamique lui-même. Il en va de même pour les forces de frottements entre la bague de frottement des moyens de liaison et l'axe de rotation, à savoir soit l'axe en rotation, soit le volet aérodynamique lui-même, qui sont elles aussi réduites dans cette variante avantageuse de l'invention.

Avantageusement, la position indexée du volet est une position dans laquelle le volet aérodynamique présente un angle d'au moins 40° par rapport au volet aérodynamique en position fermée, de préférence un angle compris entre 40° et 90°.

Ainsi, il est possible de verrouiller la position d'ouverture du volet qui représente la meilleure position aérodynamique du véhicule mais qui est également la position pour laquelle les contraintes subies et répercutées par le volet sont généralement les plus importantes. Dès lors, le verrouillage d'une telle position du volet assure un aérodynamisme optimal du véhicule tout en protégeant le moteur et ses composants de tout endommagement dû aux contraintes aérodynamiques subies et répercutées par le volet.

Pour des besoins de description de l'invention, il est pris comme référence une transmission d'efforts par un moyen moteur sur un axe de rotation, le moyen moteur étant situé à une extrémité de l'axe de rotation. L'invention n'est bien entendu pas limitée à cette unique disposition. Le moyen moteur, plus généralement nommé actionneur, peut être positionné différemment le long de l'axe de rotation. La transmission d'efforts peut également être assurée par d'autres moyens, telle qu'une bielle par exemple. Ces variantes de réalisation n'altèrent en rien le bon fonctionnement du système aérodynamique rétractable de l'invention.

L'invention sera mieux comprise à la lecture des figures annexées, qui sont fournies à titre d'exemples et ne présentent aucun caractère limitatif, dans lesquelles :
- la figure 1 est un schéma illustrant le positionnement d'un système aérodynamique rétractable par rapport à une partie avant de véhicule ;
- la figure 2 est un schéma illustrant une moitié d'un axe de rotation d'un système aérodynamique rétractable pour véhicule automobile ;

- la figure 3 est une coupe schématique transversale de l'axe de rotation du système lorsque ce dernier n'est pas verrouillé dans une position indexée ;
- la figure 4 est une coupe schématique transversale de l'axe de rotation du système lorsque ce dernier est verrouillé dans une position indexée ;
- la figure 5 est un schéma illustrant un mode de réalisation d'une partie du système aérodynamique rétractable de l'invention ;
- la figure 6 est un schéma illustrant une variante du système de l'invention, dans laquelle un logement est situé sur le volet aérodynamique ; et
- la figure 7 est un schéma illustrant, en vue éclatée, le système aérodynamique rétractable de la figure 5 par rapport à une partie de la structure du véhicule.

On va décrire en détails un système aérodynamique rétractable 1 pour véhicule automobile 70 comprenant une structure du véhicule 7. Ce système 1 comprend au moins un volet aérodynamique 4, un moteur 2 apte à mettre en rotation le volet aérodynamique 4 autour d'un axe de rotation 3, et au moins un organe de verrouillage 5 du volet aérodynamique 4 dans au moins une position indexée par rapport à la structure du véhicule 7, l'organe de verrouillage 5 étant apte à transmettre des efforts subis par le volet aérodynamique 4 à la structure du véhicule 7 lorsque le volet aérodynamique 4 est verrouillé dans la position indexée.

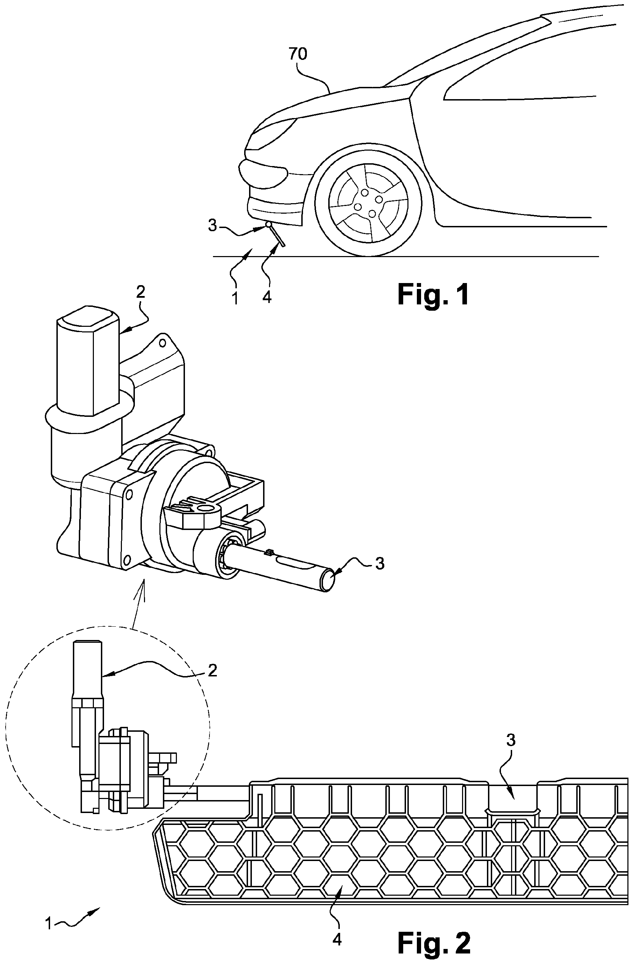

On va décrire un exemple particulier de réalisation à l'aide des figures 1 à 6, dans lequel l'axe de rotation 3 est matérialisé par un arbre de rotation 3, par exemple une barre ou un tube de section circulaire et dans lequel le moyen moteur est constitué uniquement d'un moteur 2 électrique. L'invention n'est pas limitée à ce type de réalisation, l'axe de rotation peut, par exemple, être matérialisé par deux demi arbres ou par une partie du volet aérodynamique lorsque l'axe de rotation et le volet forment une seule et même pièce. Le moyen moteur peut quant à lui être un ensemble constitué d'un réducteur et d'un moteur électrique.

On a illustré à la figure 1 une partie avant d'un véhicule automobile 70 sous laquelle est positionné un système aérodynamique 1 selon l'invention comprenant un arbre de rotation 3 et un volet aérodynamique 4 rétractable verrouillé en position ouverte.

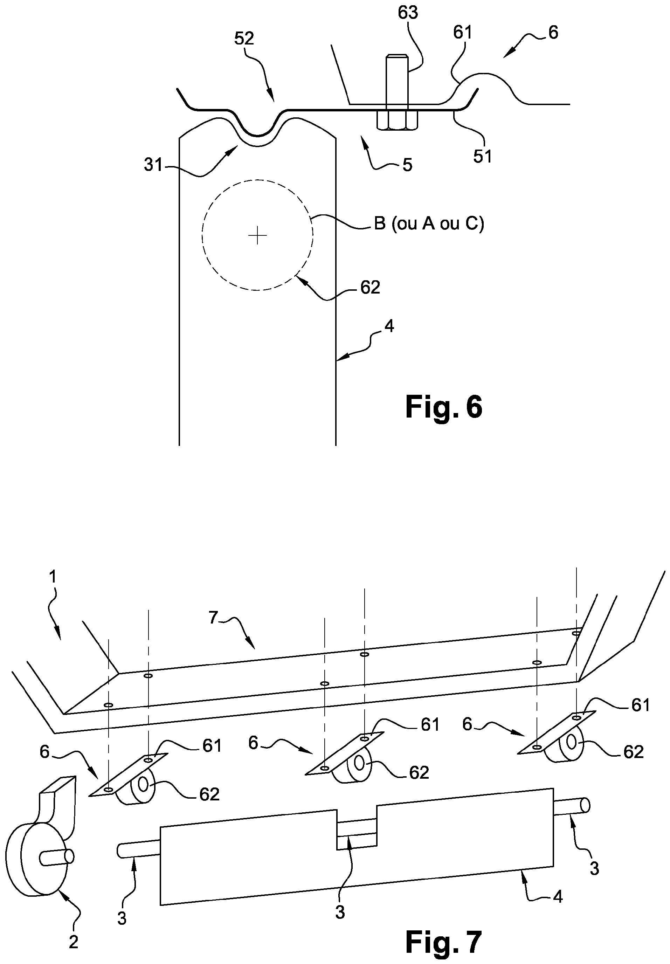

On a illustré à la figure 2 une partie d'un système aérodynamique rétractable 1 pour véhicule automobile comprenant un moteur 2, un arbre 3 entrainé en rotation par le moteur 2 et portant le volet aérodynamique 4 rétractable. Le volet aérodynamique 4 est monté pivotant entre une position repliée sous la structure du véhicule 7 (visible sur la figure 7) et une position dépliée dans laquelle le volet 4 fait saillie vers le bas.

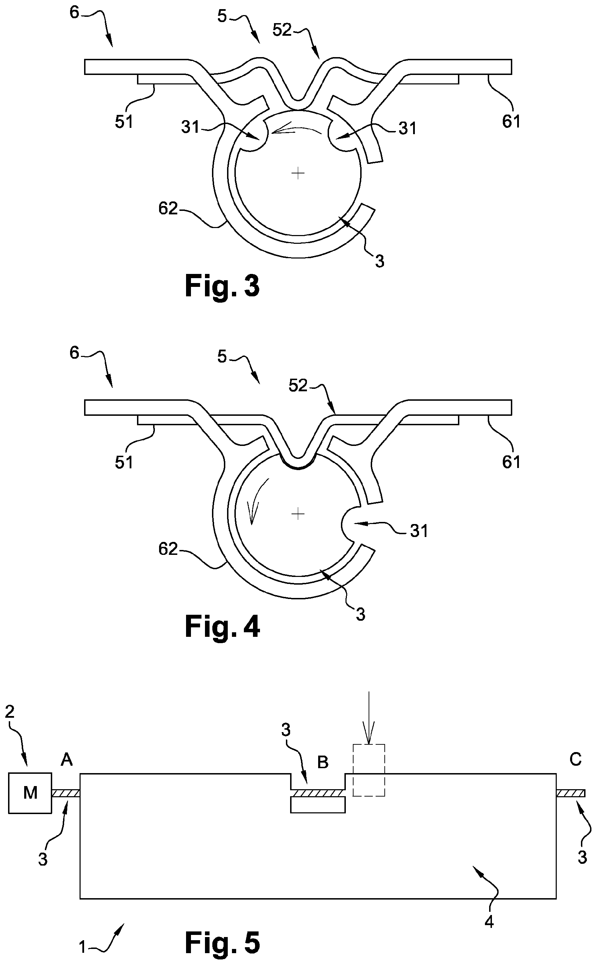

Comme illustré aux figures 3, 4 et 6, le système 1 comprend également un organe de verrouillage 5, comprenant une partie fixe 51, fixée à des moyens de liaison 6, et un élément ressort 52. L'élément ressort 52 représenté aux figures 3 et 4 est agencé pour entrer sans jeu dans un des deux logements 31 présents sur l'arbre 3, lors de la rotation de ce dernier. Chacun des deux logements 31 correspond à une position indexée du système 1. Chaque position traduit une inclinaison du volet aérodynamique 4, selon un angle prédéterminé. L'élément ressort 52 de la figure 6 est agencé pour entrer sans jeu dans le logement 31 présent sur le volet 4 à proximité de l'arbre, une telle configuration permettant de prévoir un plus petit débattement angulaire de l'élément ressort pour son engagement et son dégagement du logement. Lorsque seulement deux positions indexées sont prévues, l'une d'entre elle reflète la position dans lequel le volet 4 présente la meilleure performance aérodynamique, cette position et son angle d'inclinaison associé étant propres à chaque type de véhicule. La seconde position indexée est une position de repli dans laquelle le volet aérodynamique 4 n'est soumis à presque aucune force de trainée. Ces deux positions sont amenées à être maintenues lors de l'usage du véhicule 70, et ce sans mise sous tension du moteur 2.

Dans les modes de réalisation illustrés aux figures 3, 4 et 6, le système 1 comprend uniquement des logements 31 qui comprennent une cavité de forme concave et de profondeurs identiques. Dans une variante non représentée d'un mode de réalisation de l'invention, les logements 31 peuvent être en plus grand nombre, de profondeurs et de formes différentes et situés sur l'arbre 3 ou sur le volet 4, ou encore à la fois sur l'arbre 3 et le volet 4. Ils peuvent également être répartis sur la longueur de l'axe de rotation du système 1, de manière à accueillir chacun un élément ressort 52 différent, ces éléments ressort 52 étant, eux aussi, disposés le long de l'arbre 3 et du volet 4.

Les logements 31 situés sur l'arbre 3 peuvent être répartis selon différentes zones A, B et/ou C de l'arbre 3, comme illustré sur la figure 5. Chaque zone présentant un intérêt particulier pour le positionnement de ces logements 31. La zone A de l'arbre 3 est la zone la plus proche du moteur 2. Par conséquent, le couple que doit exercer le moteur 2 afin de désassembler l'élément ressort 52 et le logement 31 est moins important. La zone B correspond au centre de poussé du volet 4. Par conséquent, le positionnement d'un point de verrouillage dans cette zone présente un avantage quant aux efforts de torsion que subit le volet 4, ces derniers pouvant être répartis plus équitablement dans tout le volet 4. Ainsi le volet 4 peut être dimensionné de façon à être moins rigide. Enfin, la zone C est la zone la plus éloignée du moteur 2 dans cette configuration spécifique du système 1 de l'invention. L'intérêt de positionner un point de verrouillage dans cette zone est l'amortissement optimal des efforts subit par le volet 4, et éventuellement la possibilité d'exercer une pré-tension du volet 4 à l'aide du moteur 2 afin de le rendre moins déformable. Ainsi, cela permet de faire collaborer l'organe de verrouillage 5 et le moyen moteur 2 à la tenue des efforts aérodynamiques.

Les moyens de liaisons 6 comprennent une partie 61 fixée à la structure du véhicule 7 et une partie d'accueil 62 creuse, par exemple de forme cylindrique, agencée pour accueillir la partie rotative du système 1, formée par l'arbre 3 et/ou le volet 4, tout en permettant la rotation de cette partie. La partie d'accueil 62 des moyens de liaison 6 peut également être qualifiée de bague de rotation 62, compte tenu de sa fonction de soutien de la partie rotative du système 1 et de sa vocation à limiter les frictions. De cette manière, les moyens de liaison 6 transmettent à la structure du véhicule 7 les efforts reçus de l'organe de verrouillage 5, tout en amortissant une partie de ces efforts.

La figure 7 illustre une manière dont les moyens de liaison 6 sont rattachés à la structure du véhicule 7. Pour des raisons de clarté, l'organe de verrouillage 5 n'a volontairement pas été représenté sur cette figure 7. Un exemple de liaison positive entre la partie rigide 52 de l'organe de verrouillage 5 et les moyens de liaison 6 est illustré figure 6. Cette liaison est réalisée grâce à vis 63 qui fixe solidairement la partie rigide 51 et la partie 61 des moyens de liaison 6.

L'ensemble constitué de l'organe de verrouillage 5, l'arbre 3, et/ou les moyens de liaison 6 peuvent être réalisés à partir de matériaux caractérisés par un faible coefficient de frottement (de l'ordre de 0,1). De tels matériaux peuvent être de l'inox, de l'acier traité ou du plastique à friction faible.

Le système 1 de l'invention fonctionne comme suit.

Lorsque la vitesse du véhicule augmente, le moteur 2 est mis en marche pour induire la rotation de l'arbre 3, dans le but de faire pivoter le volet 4 d'une position repliée jusqu'à la position d'ouverture. Lors de la rotation de l'arbre 3, l'élément ressort 52 de l'organe de verrouillage 5 est comprimé et se trouve en contact avec la partie extérieure de l'arbre 3, comme illustré à la figure 3, ou avec la partie extérieure du volet 4, comme illustré à la figure 6. Grâce aux matériaux sélectionnés, les efforts dus aux frottements entre l'élément ressort 52 et l'arbre 3 ou le volet, ainsi que les efforts dus aux frottements entre la partie d'accueil 62 des moyens de liaison 6 et l'arbre 3 sont très faibles, voire nuls et n'ont pas de répercussion négative sur le moteur 2 et ses composants.

Une fois que l'élément ressort 52 arrive au niveau du logement 31, correspondant à la position d'ouverture, il entre sans jeu dans le logement 31, grâce à sa forme convexe qui épouse parfaitement la forme concave du logement 31, et forme un point de verrouillage, aussi appelé « point dur » du système 1. Le moteur 2 s'arrête, provoquant également l'arrêt de la rotation de l'arbre 3.

Comme déjà mentionné, lorsque le volet 4 est bloqué dans la position ouverte, il est soumis à de nombreux efforts qui vont être amortis par l'élément ressort 52 et transmis aux moyens de liaison 6 par l'ensemble de l'organe de verrouillage 5. Ces efforts sont ensuite transmis à la structure du véhicule 7 par les moyens de liaison 6. Durant toute cette période, le volet 4 est soumis à des efforts aérodynamiques qui ne sont pas assez importants pour risquer de l'endommager. Dans le cas contraire, les efforts aérodynamiques et/ou autres, subis par le volet 4 sont trop importants pour être amortis et/ou transmis à la structure du véhicule 7 et le couple, résultant de ces efforts, qui s'applique sur l'arbre 3 entraîne la sortie de l'élément ressort 52 du logement 31. Dans le cas spécifique d'un moteur 2 de type irréversible, le moteur 2 est également peut être activé lorsque le couple qui s'applique sur l'arbre 3, ou sur le volet 4, entraîne la sortie de l'élément ressort 52, de manière à accompagner le mouvement de rotation nécessaire pour atteindre une autre position indexée. Pour ce faire, le système peut être équipé de tout moyen permettant de détecter que le volet aérodynamique 4 quitte sa position indexée, un tel moyen pouvant être, par exemple, un capteur de position. En variante, le système 1 peut également être équipé d'un organe de débrayage permettant le désengagement de la liaison entre le moteur 2 et la partie rotative du système 1. Ainsi la réactivation mentionnée ci-dessus du moteur 2 n'est pas nécessaire.

Le déverrouillage de la position ouverte du volet 4 peut aussi être induit par le moteur 2 lui-même, lors d'une réduction de la vitesse du véhicule. Il n'est donc plus nécessaire que le volet 4 soit déplié. Dès lors, le moteur 2 est activé de manière à exercer un couple supérieur au seuil prévu pour engendrer la sortie de l'élément ressort 52. Le moteur 2 peut ensuite entraîner l'arbre 3 en rotation avec un couple réduit, comparativement au couple nécessaire pour sortir l'élément ressort 52 du logement 31, jusqu'à ce que l'élément ressort 52 rencontre le second logement 31, correspondant à la position de repli du volet 4. En effet, le couple est réduit car le moteur 2 exerce un effort sur des éléments peu déformables avant d'engager le verrouillage, ce qui n'est pas le cas si celui-ci est positionné en zone B ou C.

Dans un mode de réalisation non représenté, le volet peut également passer de la position ouverte à une seconde position de repli, différente de la position de repli initiale. Le logement permettant de positionner le volet dans cette seconde position de repli peut être positionné de telle sorte que pour indexer cette seconde position de repli, il n'est pas nécessaire de changer le sens de rotation de l'arbre initialement utilisé pour passer de la position de repli initiale à la position d'ouverture. Une telle variante peut être avantageuse lorsque des efforts trop importants s'appliquent sur le volet selon un sens opposé au sens de rotation nécessaire pour revenir à la position de repli initiale. Une telle approche permet donc d'incliner le volet dans une seconde position de repli, dans laquelle le volet est moins sujet aux contraintes aérodynamiques, et ce sans qu'il soit nécessaire d'induire une rotation du volet par le moteur dans le sens opposé au sens des efforts qui s'appliquent sur le volet. En effet, à force de répétitions d'une telle rotation dans le sens opposé, il existe un risque d'accélération de l'usure du moteur et de ses composants, notamment à cause du couple important qu'il est nécessaire de mettre en œuvre afin d'assurer une telle rotation.

## Revendications

1. Système aérodynamique rétractable (1) pour véhicule automobile (70) comprenant une structure du véhicule (7), **caractérisé en ce que** le système (1) comprend au moins un volet aérodynamique (4), un moyen moteur (2) apte à mettre en rotation le volet aérodynamique (4) autour d'un axe de rotation (3), et au moins un organe de verrouillage (5) du volet aérodynamique (4) dans au moins une position indexée par rapport à la structure du véhicule (7), l'organe de verrouillage (5) étant apte à transmettre des efforts subis par le volet aérodynamique (4) à la structure du véhicule (7) lorsque le volet aérodynamique (4) est verrouillé dans la position indexée, l'organe de verrouillage (5) comprenant au moins un ensemble constitué d'un élément ressort (52) et d'un logement (31) agencé pour accueillir au moins une partie de l'élément ressort (52), le logement (31) et l'élément ressort (52) étant agencés pour être assemblés l'un à l'autre avec un jeu faible, de préférence à jeu nul..

2. Système (1) selon la revendication 1, dans lequel l'organe de verrouillage (5) étant apte à transmettre les efforts subis de façon à permettre un verrouillage du volet aérodynamique (4) sans effort exercé par le moyen moteur (2).

3. Système (1) selon la revendication précédente, dans lequel le jeu est inférieur à tous jeux présents au sein du reste du système.

4. Système (1) selon la revendication 3, dans lequel le logement (31) comprend une cavité, de préférence une forme concave présentant une profondeur de 2 à 5 mm.

5. Système (1) selon l'une quelconque des revendications 3 à 4, dans lequel l'élément ressort (52) est agencé pour se désengager du logement (31) lorsqu'un couple exercé autour de l'axe de rotation (3) est supérieur à un seuil prédéterminé, de préférence 50% des efforts maximaux subis par le volet aérodynamique (4) en roulage.

6. Système (1) selon l'une quelconque des revendications précédentes, comprenant en outre un organe de débrayage pour le désengagement d'une liaison entre le moyen moteur (2) et le volet aérodynamique (4).

7. Système (1) selon l'une quelconque des revendications 3 à 6, dans lequel le logement (31) ou au moins l'un des logements (31) est situé sur le volet aérodynamique (4).

8. Système (1) selon l'une quelconque des revendications 3 à 7, dans lequel le logement (31) ou au moins l'un des logements (31) est éloigné du moyen moteur (2), de préférence ledit logement étant situé à proximité du centre de poussé du volet aérodynamique (4).

9. Système (1) selon l'une quelconque des revendications 3 à 8, dans lequel le logement (31) ou au moins l'un des logements (31) est situé sur à proximité du moyen moteur (2).

10. Système (1) selon l'une quelconque des revendications 3 à 9, comprenant au moins deux logements (31) dont les cavités présentent des profondeurs différentes l'une de l'autre.

11. Système (1) selon l'une quelconque des revendications 3 à 10, comprenant au moins deux logements (31) disposés au sein du système (1) pour permettre le verrouillage de la même position indexée.

12. Système (1) selon l'une quelconque des revendications 3 à 11, comprenant des moyens de liaison (6) du volet aérodynamique (4) à la structure du véhicule (7), les moyens de liaisons (6) étant agencés pour permettre une rotation du volet aérodynamique (4) autour de l'axe de rotation (3), dans lequel l'élément ressort (52) est fixé aux moyens de liaison (6).

13. Système (1) selon l'une quelconque des revendications précédentes, dans lequel l'organe de verrouillage (5), l'axe de rotation (3), et/ou les moyens de liaison (6) sont formés à partir d'inox, acier traité ou plastique à friction faible.

14. Système (1) selon l'une quelconque des revendications précédentes, dans lequel la position indexée du volet aérodynamique (4) est une position dans laquelle le volet aérodynamique (4) présente un angle d'au moins 40° par rapport au volet aérodynamique (4) en position fermée, de préférence un angle compris entre 40° et 90°.

## Patentansprüche

1. Einziehbares aerodynamisches System (1) für Kraftfahrzeug (70), umfassend eine Struktur des Fahrzeugs (7), **dadurch gekennzeichnet dass** das System (1) wenigstens eine aerodynamische Klappe (4) umfasst, ein Motormittel (2), das imstande ist, die aerodynamische Klappe (4) in Rotation um eine Rotationsachse (3) zu versetzen, und wenigstens ein Organ (5) zum Arretieren der aerodynamischen Klappe (4) in wenigstens einer gegenüber der Struktur des Fahrzeugs (7) indexierten Position, wobei das Organ (5) zum Arretieren imstande ist, Kräfte, die von der aerodynamischen Klappe (4) erfahren werden, auf die Struktur des Fahrzeugs (7) zu übertragen, wenn die aerodynamische Klappe (4) in der indexierten Position arretiert ist, wobei das Organ (5) zum Arretieren wenigstens eine Anordnung umfasst, die gebildet ist von einem Federelement (52) und von einer Aufnahme (31), die zum Aufnehmen wenigstens eines Teils des Federelements (52) eingerichtet ist, wobei die Aufnahme (31) und das Federelement (52) so eingerichtet sind, dass sie mit einem geringen Spiel zusammengefügt werden können, wobei das Spiel vorzugsweise null beträgt.

2. System (1) nach Anspruch 1, wobei das Organ (5) zum Arretieren imstande ist, die erfahrenen Kräfte so zu übertragen, dass sie eine Arretierung der aerodynamischen Klappe (4) ohne durch das Motormittel (2) ausgeübte Kraft gestatten.

3. System (1) nach dem vorhergehenden Anspruch, wobei das Spiel geringer ist als alle im Inneren des übrigen Systems vorhandenen Kräfte.

4. System (1) nach Anspruch 3, wobei die Aufnahme (31) eine Vertiefung umfasst, vorzugsweise eine konkave Form, die eine Tiefe von 2 bis 5 mm aufweist.

5. System (1) nach einem der Ansprüche 3 bis 4, wobei das Federelement (52) eingerichtet ist, um sich aus der Aufnahme (31) zu lösen, wenn ein Drehmoment, das um die Rotationsachse (3) ausgeübt wird, größer als ein vorher bestimmter Schwellwert ist, vorzugsweise 50 % der durch die aerodynamische Klappe (4) beim Fahren erfahrenen maximalen Kräfte.

6. System (1) nach einem der vorhergehenden Ansprüche, ferner umfassend ein Entkupplungsorgan zum Lösen einer Verbindung zwischen dem Motormittel (2) und der aerodynamischen Klappe (4) .

7. System (1) nach einem der Ansprüche 3 bis 6, wobei die Aufnahme (31) oder wenigstens eine der Aufnahmen (31) sich auf der aerodynamischen Klappe (4) befindet.

8. System (1) nach einem der Ansprüche 3 bis 7, wobei die Aufnahme (31) oder wenigstens eine der Aufnahmen (31) von dem Motormittel (2) beabstandet ist, wobei die Aufnahme sich vorzugsweise in der Nähe des Schubzentrums der aerodynamischen Klappe (4) befindet.

9. System (1) nach einem der Ansprüche 3 bis 8, wobei die Aufnahme (31) oder wenigstens eine der Aufnahmen (31) sich in der Nähe des Motormittels (2) befindet.

10. System (1) nach einem der Ansprüche 3 bis 9, umfassend wenigstens zwei Aufnahmen (31), deren Vertiefungen Tiefen aufweisen, die voneinander verschieden sind.

11. System (1) nach einem der Ansprüche 3 bis 10, umfassend wenigstens zwei Aufnahmen (31), die im Inneren des Systems (1) angeordnet sind, um die Arretierung der gleichen indexierten Position zu gestatten.

12. System (1) nach einem der Ansprüche 3 bis 11, umfassend Mittel zum Verbinden (6) der aerodynamischen Klappe (4) mit der Struktur des Fahrzeugs (7), wobei die Mittel zum Verbinden (6) so eingerichtet sind, dass sie eine Rotation der aerodynamischen Klappe (4) um die Rotationsachse (3) gestatten, wobei das Federelement (52) an den Mitteln zum Verbinden (6) befestigt ist.

13. System (1) nach einem der vorhergehenden Ansprüche, wobei das Organ zum Arretieren (5), die Rotationsachse (3) und/oder die Mittel zum Verbinden (6) aus rostfreiem Stahl, aus behandeltem Stahl oder Kunststoff mit geringer Reibung gebildet sind.

14. System (1) nach einem der vorhergehenden Ansprüche, wobei die indexierte Position der aerodynamischen Klappe (4) eine Position ist, in der die aerodynamische Klappe (4) einen Winkel von wenigstens 40° gegenüber der aerodynamischen Klappe (4) in geschlossener Position aufweist, vorzugsweise einen Winkel zwischen 40° und 90°.

## Claims

1. Retractable aerodynamic system (1) for a motor vehicle (70) comprising a structure of the vehicle (7), **characterised in that** the system (1) comprises at least one aerodynamic flap (4), a drive means (2) that can rotate the aerodynamic flap (4) about a rotation axis (3), and at least one member (5) for locking the aerodynamic flap (4) in at least one indexed position with respect to the structure of the vehicle (7), the locking member (5) being able to transmit forces experienced by the aerodynamic flap (4) to the structure of the vehicle (7) when the aerodynamic flap (4) is locked in the indexed position, the locking member (5) comprising at least one assembly consisting of a spring element (52) and a housing (31) arranged to accommodate at least a portion of the spring element (52), the housing (31) and the spring element (52) being arranged to be assembled to one another with little clearance, preferably with zero clearance.

2. System (1) according to claim 1, wherein the locking member (5) is able to transmit the forces experienced to lock the aerodynamic flap (4) without any force exerted by the drive means (2).

3. System (1) according to the preceding claim, wherein the clearance is less than all the clearances present in the rest of the system.

4. System (1) according to claim 3, wherein the housing (31) comprises a cavity, preferably having a concave shape with a depth of 2 to 5 mm.

5. System (1) according to any one of claims 3 to 4, wherein the spring element (52) is arranged to disengage from the housing (31)when a torque exerted about the rotation axis (3) is greater than a predetermined threshold, preferably 50 % of the maximum forces experienced by the aerodynamic flap (4) when driving.

6. System (1) according to any one of the preceding claims, further comprising a disengagement member for disengaging a connection between the drive means (2) and the aerodynamic flap (4).

7. System (1) according to any one of claims 3 to 6, wherein the housing (31) or at least one of the housings (31) is located on the aerodynamic flap (4).

8. System (1) according to any one of claims 3 to 7, wherein the housing (31) or at least one of the housings (31) is far away from the drive means (2), said housing preferably being located near the centre of thrust of the aerodynamic flap (4).

9. System (1) according to any one of claims 3 to 8, wherein the housing (31) or at least one of the housings (31) is located near the drive means (2).

10. System (1) according to any one of claims 3 to 9, comprising at least two housings (31) whose cavities have different depths.

11. System (1) according to any one of claims 3 to 10, comprising at least two housings (31) arranged in the system (1) in order to lock the same indexed position.

12. System (1) according to any one of claims 3 to 11, comprising means (6) for connecting the aerodynamic flap (4) to the structure of the vehicle (7), the connecting means (6) being arranged to allow the aerodynamic flap (4) to rotate about the rotation axis (3) in which the spring element (52) is attached to the connecting means (6).

13. System (1) according to any one of the preceding claims, wherein the locking member (5), the rotation axis (3), and/or the connecting means (6) are made of stainless steel, treated steel or low-friction plastic.

14. System (1) according to any one of the preceding claims, wherein the indexed position of the aerodynamic flap (4) is a position in which the aerodynamic flap (4) makes an angle of at least 40° relative to the aerodynamic flap (4) in the closed position, preferably an angle between 40° and 90°.
